# EUROPEAN PATENT SPECIFICATION

(11) **EP 0 699 299 B1**
(45) Date of publication and mention of the grant of the patent: **01.07.1998**
(21) Application number: 94913189.0
(22) Date of filing: 25.04.1994
(51) Int. Cl.: G01N 21/63

(54) **DETECTION OF IRRADIATED SAMPLES**
NACHWEIS BESTRAHLTER PROBEN
DETECTION D'ECHANTILLONS IRRADIES

(30) Priority: 24.04.1993 GB 9308542
(43) Date of publication of application: 06.03.1996
(73) Proprietor: THE UNIVERSITY COURT OF THE UNIVERSITY OF GLASGOW, Glasgow G12 8QQ (GB)
(72) Inventor: SANDERSON, David, Cranston, William, Hyndland Glasgow G12 9QZ (GB)
(74) Representative: Pacitti, Pierpaolo A.M.E.
(86) International application number: GB9400877
(87) International publication number: WO9425851

(56) References cited:
- EP-A- 0 430 150
- DE-A- 3 339 750
- GB-A- 2 086 038
- McGraw-Hill encyclopedia of science and technology, 1992, keywords "Photoluminescence" (Vol.13,p.427) and "Thermoluminescence" (Vol.18, p.320,321)
- P.H.Sydenham: "Handbook of Measurement Science", 1982, Vol.1, p.447,448

## Description

This invention relates to an apparatus and method for detecting irradiated samples.

More particularly, the invention relates to an apparatus and method for detecting irradiated samples which employs high-sensitivity, low background photostimulated luminescence (PSL).

Photostimulated luminescence (PSL) (GB-A-2 086 038, EP-A-430 150) arises as the result of transfer of energy in the form of electromagnetic radiation from a stimulation source in the equipment to the sample, and the subsequent emission of luminescence from the sample. Some components of irradiated foods store energy, following exposure to ionising radiation, as a result of trapping of charge carriers at structural, interstitial or impurity sites within a dielectric medium. Subsequent stimulation with electromagnetic radiation can release trapped charge carriers, resulting in the emission of electromagnetic radiation during subsequent relaxation. Signals from small components of associated mineral debris can be found from most foods, particularly herbs, spices and seasonings, but also fruits and vegetables. Similarly, bioinorganic structures associated with bones, shells, exoskeleta etc, possess appropriate properties. Photostimulated luminescence resulting from the release of trapped charge carriers has characteristic excitation and emission spectra, depending on the underlying trapping and luminescence process. The time scale for the relaxation step between stimulation and luminescence emission is characteristic of the dynamics of the recombination process.

The radiation specificity of apparatus to measure PSL for the purpose of detecting irradiated foods can be achieved by (a) selection of an anti-Stokes excitation and detection scheme, whereby the detection wavelength is shorter than the stimulating wavelength, and/or (b) the adoption of a timing system to detect only luminescence from a particular recombination mechanism. Ultimate radiation specificity arises from the combination of both approaches.

According to the present invention there is provided apparatus for detecting irradiated samples using photostimulated luminescence as defined in claim 11.

Further according to the present invention there is provided a method of detecting irradiated samples using photostimulated luminescence as defined in claim 1.

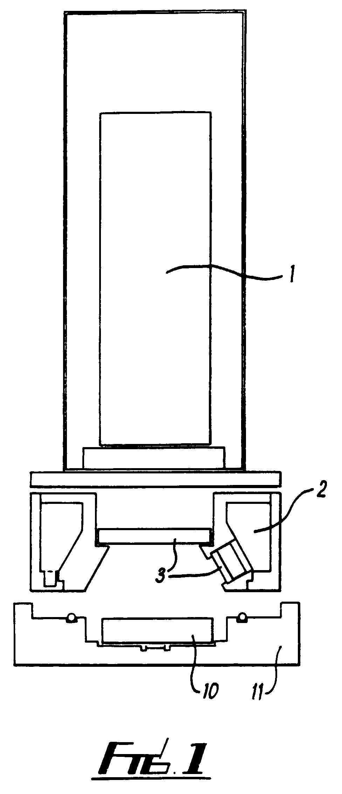

Embodiments of the present invention will now be described, by way of example only, with reference to the accompanying drawings, in which:-
Fig. 1 is a schematic general layout of apparatus for carrying out the present invention;

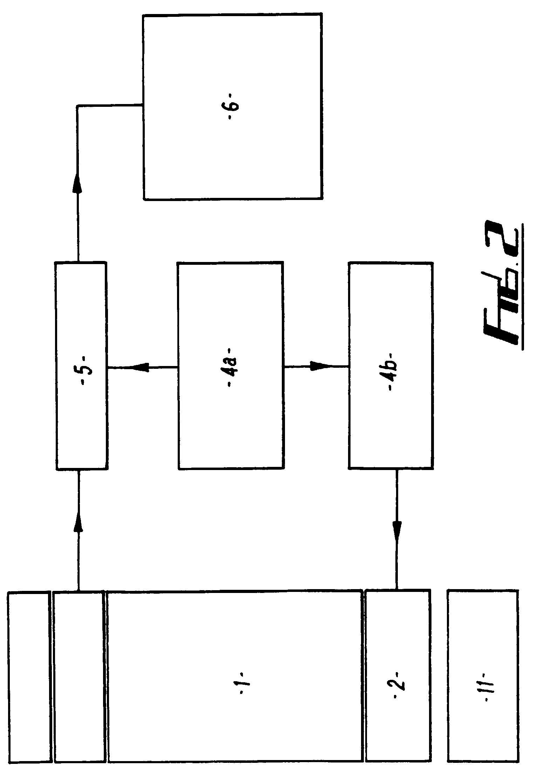

Fig. 2 is a schematic block diagram of the apparatus of Fig. 1; and
Fig. 3 illustrates timing diagrams for the apparatus of Figs 1 and 2.

Referring to the drawings, there is described apparatus for detecting irradiation using photoluminescence. The apparatus consists of a photomultiplier system 1 (or alternative light detector), a pulsed stimulation source 2 (e.g. an array of led's or a laser diode system), an optical filtering system 3 to define both the stimulation and detection wavebands, a control unit 4a, 4b containing pulsed electronics to control the light source 2, a photon counter 5, gated by the control unit 4a to lock into the luminescence from irradiated samples, and a display unit 6, which may be a small computer, or a simple display unit.

In use, samples 10 are placed in a sample chamber 11 - for herbs and spices they may be presented as a thin layer on a disposable sample tray, which is closed before the measurement begins. During measurement the stimulation source 2 is operated in pulsed mode, and the photomultiplier signal resulting from PSL originating in the sample 10 is recorded by photon counting. The integrated photon count at the end of the measurement (the terminal count) is used to determine whether the sample 10 had been irradiated. Unirradiated samples give a small random background signal, whereas irradiated samples produce a positive signal. The size of the positive signal from irradiated samples varies considerably depending on the quantity and type of inorganic material associated with the food samples. These sensitivity differences can, if necessary be taken into account by a calibration measurement using a portion of the sample irradiated to a known dose.

The instrument achieves a high detection rate (greater than 95%) through a number of design features leading to the desired effects of (1) a low background from unirradiated samples, (2) a sufficiently high sensitivity to detect the majority of irradiated samples, and (3) a highly radiation specific response. The measurement approach is also extremely versatile in that variants of the instrument can be prepared for a number of particular analytical tasks.

The design incorporates the following features:
1 Low Background
   A low background from the instrument itself and from unirradiated samples is required to achieve a sufficiently wide dynamic response range to achieve reliable qualitative detection of the full range of irradiated foods. This is achieved in three ways
   1.1 Spectral isolation of detection and stimulation bands
      Avoidance of cross talk between stimulation source and detection waveband is extremely important in a low background instrument. This is achieved using a combination of long pass filters in the stimulation port, and band pass filters in the detection port.
      Irradiated herbs, spices fruits and vegetables can be detected using infra-red stimulated luminescence detected in the UV-VIS waveband. With GaAlAs light emitting diodes providing the illumination source (peak wavelengths 880-940 nm), and photon counting as the detection method the stimulation and detection wavebands can be completely isolated by the introduction of long pass filters (with a cut off wavelength between 700 and 800 nm) between the stimulation source and the sample chamber, and also by introducing a band-pass filter (eg Schott BG39 for a bialkali photocathode, UGll for a solar-blind system) between the sample and the photomultiplier. Whereas the use of filtration in combination with the detection tube is well established in luminescence studies the combined use of long pass filters and band pass filters is new. Where led's are used in conjunction with stimulation filters they can be grouped together in ports of 3 or more diodes, each one of which presents a filtered illumination field.
   1.2 The use of an illumination and viewing geometry whereby the main stimulation illumination impinges on the sample at a range of low angles of incidence, and the detection system views the luminescence emitted at angle close to normal. Thus the main reflected stimulation beam does not enter the photomultiplier directly.
   1.3 Automatic subtraction of dark counts and residual long-period background signals.
      The background signal from an instrument with fully isolated stimulation and detection wavebands, and no light leaks is due essentially to the photomultiplier dark signal. The presence of non-radiation induced luminescence or slight light leaks into the sample chamber may provide additional sources, and sets the minimum detectable level in conventional luminescence instruments. Both these background sources can be effectively removed by the use of either of two pulsed and synchronised detection schemes described below under 3.2. These techniques result in a background which is reduced by typically two orders of magnitude, and contribute to the high performance of this instrument and to a high detection rate for irradiated foods.
2 High sensitivity
   A high sensitivity is needed to cope with the small signal levels associated with samples containing only trace levels of inorganic materials. This is achieved by
   2.1 The use of broad detection windows
   2.2 The use of a sufficiently powerful stimulation source. For example multiple led's grouped together in clusters and filtered.
   2.3 The illumination of a large sample area. A prototype instrument with 50 mm diameter sample area is highly sensitive for detection of irradiated herbs and spices. Larger sample chambers and fields of illumination can be used for fruits and vegetables.
   2.4 The use of appropriate stimulation and detection geometry to make positive use of stimulating radiation reflected once from the sample surface, and once again from a reflective bevel inside the sample chamber, which returns the beam to the sample surface.
   2.5 The use of photon counting for high sensitivity detection of stimulated luminescence.
3 High radiation specificity
   The radiation specificity is achieved by the following means used separately, or in combination
   3.1 Wavelength selection
      Configuring the instrument to respond only to anti-Stokes luminescence, where the detection wavelength is shorter than the stimulating wavelength sets the specific requirement that the luminescence process involves energy storage. If the detection wavelength is predominantly in the UV, and the stimulation mechanism excludes materials with low photo-ionisation band gaps, then the system becomes entirely radiation specific.
      In the example of the instrument to detect herbs, spices fruits and vegetables, the detection band defined by bialkali cathode photomultipliers in conjunction with BG39 filters is predominantly UV-VIS; the use of solar blind photomultipliers forces a UV only detection band. The use of IR stimulation with these systems is an anti-Stokes transition associated with silicate materials in or on the sample, and is highly radiation specific.
      In the case of some bioinorganic substances, (eg calcite, apatite) the use of visible stimulation and detection bands can lead to higher sensitivity. The instrument can be configured to these stimulation/detection schemes. In this case timing based radiation specificity becomes more important.
   3.2 Pulsed Mode Operation
      The use of pulsed mode operation, where the stimulating source is pulsed in a manner which is synchronised with an up/down counter, results in both a dramatic improvement in dark count response (see 1.3), and can be used to enhance radiation specificity. The luminescence dynamics (delay following initial stimulation, and timescale for release of luminescence following pulsed stimulation) are characteristics of the underlying charge transfer processes. These characteristics can be used to enhance radiation specificity in two related modes, both of which are inventive.

### Mode A : Synchronised detection and automatic background rejection.

In this case the light source (eg led array) is pulsed symmetrically on and off for equal periods during measurements, using an oscillator. The same oscillator controls the direction of photon counting in a synchronised manner so that the photon counter counts up during the on period and down during the off period. The counter contents accumulate a signal which is purely due to the luminescence generated synchronously with the oscillator time scale. By selection of an oscillator period which is slightly longer than the characteristic timescale for the majority of the fast component of the PSL, background signals due to phosphorescence, dark count, light leaks, non-radiation induced chemiluminescence etc, are rejected by the up/down counter. For Mode A operation it is necessary to isolate the stimulation and detection wavebands.

### Mode B: A-synchronous stimulation and detection.

In this mode the stimulation source is briefly pulsed with a longer detection period in between pulses. The detector can be either B.1 gated on during the whole off period of the stimulation source, or B.2 operated in up/down mode throughout the detection period, once again synchronised to the characteristic time scale of the major luminescence emission. In mode B.2 the advantages of automatic background subtraction are retained without the need for complete spectral isolation of stimulation source and detector.

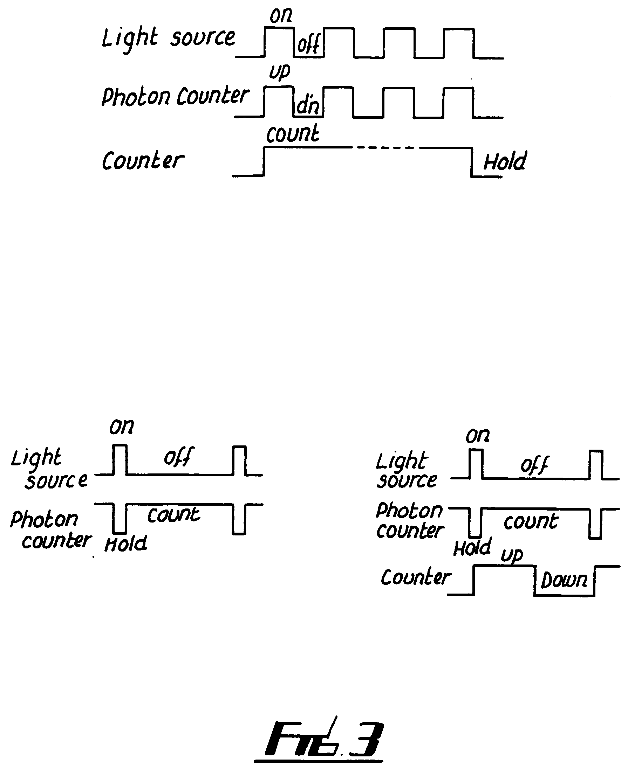

The timing characteristics of these pulsed modes are shown in figure 3.

Modifications and improvements may be incorporated without departing from the scope of the invention.

The invention uses photostimulated luminescence to identify irradiated foods. Important features are the non-contact nature of measurement, allowing foods of different types to be examined rapidly without extensive sample preparation, and the generation of a radiation specific signal, and sufficiently high sensitivity to identify a high proportion (>95%) of irradiated samples without the need for individual calibration using a radiation source.

Simple screening measurements therefore can be performed by control authorities, eg during customs inspections, by public analysts, by commercial quality departments, by retail organisations, or by consumers and consumer groups. These are essentially qualitative measurements. The measurement process does not entirely remove the signal. Therefore if necessary the sample can be sent to a reference laboratory for confirmation and for calibration. When used in conjunction with a calibrated radiation source the sample sensitivity can be measured, thus forming a basis for formal confirmation of the result, and quantitative dose estimation using the method of standard additions.

The device can be produced in a number of forms, for use for specific food types, for use in laboratories, production and storage areas, or for portable use in many different locations and environments. It is immediately suitable for detection of irradiated herbs, spices and seasonings. It can be applied in screening mode to fruits and vegetables. It may be applicable to the detection of irradiated shellfish, and meat or poultry containing bone fragments.

The instrument is also suitable for secondary use in the field of radiation dosimetry.

The invention accordingly provides a simple to use and rapid measurement system for detecting irradiation in samples.

In view of the nature of the invention, the apparatus and method can be advantageously employed in real time analysis of samples which may have been subjected to irradiation. This has particular application in production line monitoring wherein a control feedback arrangement may be utilised.

Again, the nature of the mode of operation permits a scanning technique to be used to evaluate radiation in admixtures where the radiation may not be homogenously distributed through the sample being analysed.

## Claims

1. A method of detecting samples which have been exposed to ionising radiation using photostimulated luminescence, the method comprising the steps of subjecting the samples to periodically pulsed stimulation with electro-magnetic radiation in the infrared or visible wavelength regions to cause photons to be emitted from the sample and subsequent detection of emitted photons, said detection being effected at wavelengths shorter than the stimulation wavelength.

2. A method as claimed in Claim 1, wherein the electro-magnetic radiation is pulsed on and off for respective equal, symmetric, periods.

3. A method as claimed in Claim 1, wherein the electro-magnetic radiation is pulsed on and off for respective unequal, asymmetric, periods.

4. A method as claimed in any preceding Claim, wherein the detection of emitted photons is synchronous with the pulsed stimulation.

5. A method as claimed in any preceding Claim and including the step of effecting band separation between the stimulating electro-magnetic radiation wavelength and the photon detection wavelength.

6. A method as claimed in any preceding Claim, wherein the stimulating electro-magnetic radiation impinges on the sample at a low angle of incidence to the surface of the sample and detection of emitted photons is effected at angles close to normal to the surface of the sample.

7. A method as claimed in Claim 6, wherein stimulating electro-magnetic radiation reflected from the sample is in turn reflected back to the sample.

8. A method as claimed in any preceding Claim, wherein the detection of emitted photons is effected by photon counting.

9. A method as claimed in Claim 8, wherein photon counting is effected in one direction when the stimulating electro-magnetic radiation is pulsed on and in the opposite direction when the stimulating electro-magnetic radiation is pulsed off.

10. A method as claimed in Claim 8, wherein photon counting is in one direction for a predetermined period during a single cycle of the stimulating electro-magnetic radiation being pulsed on and off and in the opposite direction for the remainder of the cycle.

11. Apparatus for detecting samples which have been exposed to ionising radiation using photostimulated luminescence, the apparatus comprising a periodically pulsed electro-magnetic radiation source for subjecting the samples to pulsed stimulation with electro-magnetic radiation in the infrared or visible wavelength regions to cause photons to be emitted from the sample, control means for said pulsed electro-magnetic radiation source, and detection means to detect emitted photons, said detection means being operative at wavelengths shorter than the stimulation wavelength.

12. Apparatus as claimed in Claim 11, wherein the control means is such that the electro-magnetic radiation is pulsed on and off for respective equal, symmetric, periods.

13. Apparatus as claimed in Claim 11, wherein the control means is such that the electro-magnetic radiation is pulsed on and off for respective unequal, asymmetric, periods.

14. Apparatus as claimed in any one of Claims 11 to 13, wherein the detection of emitted photons is synchronous with the pulsed stimulation.

15. Apparatus as claimed in any one of Claims 11 to 14 and including filter means to effect band separation between the stimulating electro-magnetic radiation wavelength and the photon detection wavelength.

16. Apparatus as claimed in any preceding Claim, wherein the pulse electro-magnetic radiation source emits radiation which impinges on the sample at a low angle of incidence to the surface of the sample and said detection means is arranged to detect emitted photons at angles close to normal to the surface of the sample.

17. Apparatus as claimed in Claim 16, and including a reflector to reflect stimulating electro-magnetic radiation reflected from the sample back to the sample.

18. Apparatus as claimed in any of Claims 11 to 18, wherein said detector of emitted photons includes a photon counter.

19. Apparatus as claimed in Claim 18, wherein said photon counter effects counting in one direction when the stimulating electro-magnetic radiation is pulsed on and in the opposite direction when the stimulating electro-magnetic radiation is pulsed off.

20. Apparatus as claimed in Claim 18, wherein said photon counting is effected in one direction for a predetermined period during a single cycle of the stimulating electro-magnetic radiation being pulsed on and off and in the opposite direction for the remainder of the cycle.

## Patentansprüche

1. Ein Verfahren zum Nachweisen von Proben, die ionisierender Strahlung unter Verwendung photostimulierter Lumineszenz ausgesetzt wurden, wobei das Verfahren aus den Schritten besteht, die Proben periodisch gepulster Stimulation mittels elektromagnetischer Strahlung im Infrarot- oder sichtbaren Wellenlängenbereich auszusetzen, um die Ausstrahlung von Photonen aus der Probe zu verursachen, und anschließend die ausgestrahlten Photonen nachzuweisen, wobei der Nachweis bei Wellenlängen bewerkstelligt wird, die kürzer als die Stimulationswellenlänge sind.

2. Verfahren nach Anspruch 1, wobei der Impuls der elektromagnetischen Strahlung über jeweils gleiche, symmetrische Zeitspannen ein- und ausgeschaltet wird.

3. Verfahren nach Anspruch 1, wobei der Impuls der elektromagnetischen Strahlung über jeweils ungleiche, asymmetrische Zeitspannen ein- und ausgeschaltet wird.

4. Verfahren nach einem der vorangegangenen Ansprüche, wobei der Nachweis der ausgestrahlten Photonen synchron mit der Impulsstimulation erfolgt.

5. Verfahren nach einem der vorangegangenen Ansprüche, und die den Schritt einschließt, eine Bandentrennung zwischen der Wellenlänge der stimulierenden elektromagnetischen Strahlung und der Wellenlänge des Photonennachweises durchzuführen.

6. Verfahren nach einem der vorangegangenen Ansprüche, wobei die stimulierende elektromagnetische Strahlung in einem niedrigen Einfallswinkel auf die Oberfläche der Probe auftrifft und der Nachweis der ausgestrahlten Photonen in Winkeln durchgeführt wird, die nahezu rechtwinklig zur Oberfläche der Probe sind.

7. Verfahren nach Anspruch 6, wobei die von der Probe reflektierte stimulierende elektromagnetische Strahlung wiederum zurück auf die Probe reflektiert wird.

8. Ein Verfahren nach einem der vorhergegangenen Ansprüche, wobei der Nachweis der ausgestrahlten Photonen mittels Photonenzählung bewerkstelligt wird.

9. Verfahren nach Anspruch 8, wobei die Photonenzählung in einer Richtung erfolgt, wenn der Impuls der stimulierenden elektromagnetischen Strahlung eingeschaltet ist, und in der entgegengesetzten Richtung, wenn der Impuls der stimulierenden elektromagnetischen Strahlung ausgeschaltet ist.

10. Verfahren nach Anspruch 8, wobei die Photonenzählung für eine vorbestimmte Zeitspanne während eines einzelnen An- und Ausimpulszyklus der stimulierenden elektromagnetischen Strahlung in einer Richtung und in der entgegengesetzten Richtung für den Rest des Zyklus erfolgt.

11. Eine Vorrichtung zum Nachweis von Proben, die einer ionisierenden Strahlung unter Verwendung photostimulierter Lumineszenz ausgesetzt wurden, wobei die Vorrichtung eine periodisch gepulste, elektromagnetische Strahlungsquelle, um die Proben einer Impulsstimulation mittels elektromagnetischer Strahlung im Infrarot- oder sichtbaren Wellenlängenbereich auszusetzen, um die Ausstrahlung von Photonen aus der Probe zu verursachen, ein Steuerungsmittel für die periodisch gepulste, elektromagnetische Strahlungsquelle und ein Nachweismittel zum Nachweis der ausgestrahlten Photonen umfaßt, wobei das Nachweismittel bei Wellenlängen arbeitet, die kürzer als die Stimulationswellenlänge sind.

12. Vorrichtung nach Anspruch 11, wobei das Steuerungsmittel so ausgelegt ist, daß der Impuls der elektromagnetischen Strahlung über jeweils gleiche, symmetrische Zeitspannen ein- und ausgeschaltet wird.

13. Vorrichtung nach Anspruch 11, wobei das Steuerungsmittel so ausgelegt ist, daß der Impuls der elektromagnetischen Strahlung über jeweils ungleiche, asymmetrische Zeitspannen ein- und ausgeschaltet wird.

14. Vorrichtung nach einem der Ansprüche 11 bis 13, wobei der Nachweis der ausgestrahlten Photonen synchron mit der Impulsstimulation erfolgt.

15. Vorrichtung nach einem der Ansprüche 11 bis 14, die ein Filtermittel umfaßt, um eine Bandentrennung zwischen der Wellenlänge der stimulierenden elektromagnetischen Strahlung und der Wellenlänge des Photonennachweises durchzuführen.

16. Vorrichtung nach einem der vorangegangenen Ansprüche, wobei die gepulste elektromagnetische Strahlungsquelle eine Strahlung aussendet, die in einem niedrigen Einfallswinkel auf die Oberfläche der Probe auftrifft, und das Nachweismittel so angebracht ist, um ausgestrahlte Photonen in Winkeln nachzuweisen, die nahezu rechtwinklig zur Oberfläche der Probe sind.

17. Vorrichtung nach Anspruch 16, die einen Reflektor umfaßt, um von der Probe reflektierte stimulierende elektromagnetische Strahlung zur Probe zurückzureflektieren.

18. Vorrichtung nach einem der Ansprüche 11 bis 18, wobei der Meßfühler für ausgestrahlte Photonen einen Photonenzähler einschließt.

19. Vorrichtung nach Anspruch 18, wobei der Photonenzähler die Zählung in einer Richtung ausführt, wenn der Impuls der stimulierenden elektromagnetischen Strahlung eingeschaltet, und in der entgegengesetzten Richtung, wenn der Impuls der stimulierenden elektromagnetischen Strahlung ausgeschaltet wird.

20. Vorrichtung nach Anspruch 18, wobei die Photonenzählung für eine vorbestimmte Zeitspanne während eines einzelnen An- und Ausimpulszyklus der stimulierenden elektromagnetische Strahlung in einer Richtung und in der entgegengesetzten Richtung für den Rest des Zyklus erfolgt.

## Revendications

1. Un procédé pour la détection d'échantillons qui ont été exposés à un rayonnement ionisant par luminescence photostimulée, le procédé comprenant les étapes de l'exposition des échantillons à une stimulation par pulsations périodiques avec un rayonnement électromagnétique dans les zones infrarouges ou de longueurs d'onde visibles pour provoquer l'émission de photons à partir de l'échantillon et de la détection subséquente des photons émis, ladite détection étant réalisée à des longueurs d'onde plus courtes que la longueur d'onde de stimulation.

2. Un procédé selon la revendication 1, dans lequel le rayonnement électromagnétique est réalisé par impulsions 1 et 0 pendant des périodes respectives égales, symétriques.

3. Un procédé selon dans la revendication 1, dans lequel le rayonnement électromagnétique est réalisé par impulsions 1 et 0 pendant des périodes respectives inégales, asymétriques.

4. Un procédé selon l'une quelconque des revendications précédentes, dans lequel la détection des photons émis est synchrone avec la stimulation par pulsations.

5. Un procédé selon l'une quelconque des revendications précédentes et comprenant l'étape de la réalisation d'une séparation de bande entre la longueur d'onde du rayonnement électromagnétique de stimulation et la longueur d'onde de détection des photons.

6. Un procédé selon l'une quelconque des revendications précédentes, dans lequel le rayonnement électromagnétique de stimulation frappe l'échantillon à un faible angle d'incidence à la surface de l'échantillon et la détection des photons émis est effectuée à des angles proches de normale à la surface de l'échantillon.

7. Un procédé selon la revendication 6, dans lequel le rayonnement électromagnétique de stimulation réfléchi par l'échantillon est renvoyé à son tour vers l'échantillon.

8. Un procédé selon l'une quelconque des revendications précédentes, dans lequel la détection des photons émis est effectuée par comptage des photons.

9. Un procédé selon la revendication 8, dans lequel le comptage des photons est effectué dans une direction lorsque le rayonnement électromagnétique de stimulation est sur pulsation 1 et dans une direction inverse lorsque le rayonnement électromagnétique de stimulation est sur pulsation 0.

10. Un procédé selon la revendication 8, dans lequel le comptage des photons se fàit dans une direction pendant une période prédéterminée durant un cycle simple de rayonnement électromagnétique de stimulation réalisé par pulsations 1 et 0 et dans une direction inverse pendant le reste du cycle.

11. Appareil pour la détection d'échantillons qui ont été exposés à un rayonnement ionisant par luminescence photostimulée, l'appareil comprenant une source de rayonnement électromagnétique à pulsations périodiques pour soumettre les échantillons à la stimulation par pulsations avec un rayonnement électromagnétique dans les zones infrarouges ou de longueurs d'onde visibles pour que des photons soient émis à partir de l'échantillon, un moyen de contrôle pour ladite source de rayonnement électromagnétique à pulsations, et un moyen de détection pour détecter les photons émis, ledit moyen de détection fonctionnant à des longueurs d'onde plus courtes que la longueur d'onde de stimulation.

12. Appareil selon la revendication 11, dans lequel le moyen de contrôle est tel que le rayonnement électromagnétique est réalisé par pulsations 1 et 0 pendant des périodes respectives égales, symétriques.

13. Appareil selon la revendication 11, dans lequel le moyen de contrôle est tel que le rayonnement électromagnétique est réalisé par pulsations 1 et 0 pendant des périodes respectives inégales, asymétriques.

14. Appareil selon l'une quelconque des revendications 11 à 13, dans lequel la détection des photons émis est synchrone avec la stimulation par pulsations.

15. Appareil selon l'une quelconque des revendications 11 à 14 et comprenant un moyen de filtration pour effectuer la séparation de bande entre la longueur d'onde du rayonnement électromagnétique de stimulation et la longueur d'onde de détection des photons.

16. Appareil selon l'une quelconque des revendications précédentes, dans lequel la source de rayonnement électromagnétique par pulsations émet un rayonnement qui frappe l'échantillon à un faible angle d'incidence à la surface de l'échantillon et ledit moyen de détection est disposé pour détecter les photons émis à des angles proches de la normale à la surface de l'échantillon.

17. Appareil selon la revendication 16, et comprenant un réflecteur pour renvoyer un rayonnement électromagnétique de stimulation réfléchi par l'échantillon vers l'échantillon.

18. Appareil selon l'une quelconque des revendications 11 à 18, dans lequel ledit détecteur de photons émis comprend un compteur de photons.

19. Appareil selon la revendication 18, dans lequel ledit compteur de photons compte dans une direction lorsque le rayonnement électromagnétique de stimulation est réalisé par pulsations 1 et dans une direction inverse lorsque le rayonnement électromagnétique de stimulation est réalisé par pulsations 0.

20. Appareil selon la revendication 18, dans lequel ledit comptage de photons est effectué dans une direction pendant une période prédéterminée durant un cycle simple de rayonnement électromagnétique de stimulation réalisé par pulsations 1 et O et dans une direction inverse pendant le reste du cycle.
